# EUROPÄISCHE PATENTSCHRIFT

(11) **EP 0 963 519 B1**
(45) Veröffentlichungstag und Bekanntmachung des Hinweises auf die Patenterteilung: **18.02.2004**
(21) Anmeldenummer: 98962341.8
(22) Anmeldetag: 16.11.1998
(51) Int. Cl.: F16D 65/12, F16D 66/02

(54) **BREMSSCHEIBE INSBESONDERE FÜR KRAFTFAHRZEUGE**
BRAKE DISC, ESPECIALLY FOR MOTOR VEHICLES
DISQUE DE FREIN, NOTAMMENT POUR VEHICULES AUTOMOBILES

(30) Priorität: 27.11.1997 DE 19752467; 30.04.1998 DE 19819425
(43) Veröffentlichungstag der Anmeldung: 15.12.1999
(73) Patentinhaber: Continental Teves AG & Co. oHG, 60488 Frankfurt (DE)
(72) Erfinder: VEITH, Christoph, D-61476 Kronberg (DE); BEER, Wilhelm, D-65428 Rüsselsheim (DE); GEHRIG, Horst, D-65719 Hofheim (DE); FRANK, Wolfgang, D-63674 Altenstadt (DE)
(86) Internationale Anmeldenummer: PCT/EP1998/007309
(87) Internationale Veröffentlichungsnummer: WO 1999/028646

(56) Entgegenhaltungen:
- DE-A- 3 722 031
- US-A- 4 164 993
- US-A- 4 745 996
- US-A- 5 163 526
- PATENT ABSTRACTS OF JAPAN vol. 012, no. 454 (M-769), 29. November 1988 (1988-11-29) & JP 63 180733 A (HONDA MOTOR), 25. Juli 1988 (1988-07-25)

## Beschreibung

Die vorliegenden Erfindung betrifft eine zumindest einen Reibring sowie ein topfförmiges Halteteil aufweisende Bremsscheibe insbesondere für Kraftfahrzeuge.

So sind bereits Bremsscheiben unbelüfteter Bauart, d. h. mit nur einem Reibring bekannt, bei denen der Reibring üblicherweise einteilig mit dem topfförmigen Halteteil verbunden ist und über das Halteteil insbesondere an einer Fahrzeugachse befestigt werden kann. In der Praxis haben solche Bremsscheiben allerdings Nachteile aufgezeigt. Neben Defiziten der beschriebenen Bremsscheibe hinsichtlich thermischer Belastung besitzt Sie häufig ein unerwünscht hohes Gewicht aufgrund ihres hohen Materialbedarfes.

Darüber hinaus ist beispielsweise in der DE 44 36 653 A1 eine Bremsscheibenanordnung offenbart, wonach die Bremsscheibe aus einer glockenförmigen Nabe und einem Bremsring besteht. Der Bremsring besitzt zwei Reibringe, zwischen denen sich ein Belüftungskanal erstreckt und die durch Stege miteinander verbunden sind. Durch die Bremsscheibenrotation wird Kühlluft durch den Belüftungskanal geleitet, um eine übermäßige Erhitzung der gesamtem Bremsscheibe infolge Umsetzung der Bremsleistung zu verhindern. Speziell bei Fahrzeugen mit hoher Leistung ist die Gefahr einer starken Erhitzung der Bremsscheibe dennoch gegeben. Als weitere wesentliche Anforderung an eine gattungsgemäße Bremsscheibe neben der ausreichenden Kühlung erweist sich das ständige Bestreben nach einer Gewichtsreduzierung, um die im Fahrzeugbau unerwünschten ungefederten Massen am Fahrzeugrad zu verkleinern. Im Falle des genannten Dokumentes wird versucht dem Rechnung zu tragen durch Wahl unterschiedlicher Werkstoffe einerseits für den glockenförmigen Nabentopf und andererseits für den Bremsring. Unnötigerweise entstehen somit zwei Einzelteile, die erst wieder durch einen zusätzlichen Bearbeitungsschritt aufwendig miteinander verbunden werden müssen.

Aus dem gattungsgemäßen Dokument JP-A-63180733 ist ein Bremsring bekannt, dessen beide einander gegenüberliegende Reibringe über im wesentlichen radial verlaufende Stege miteinander verbunden sind. Die beiden Reibringe sind über die Stege mittels eines Gußverfahrens einstückig miteinander verbunden. Zur Verbesserung der Festigkeit und zur Vergrößerung der Wärme abstrahlenden Fläche sind die Innenwände der Reibringe mit tangentialen Rippen versehen, die konzentrisch auf den in den Flächen der Reibringe umlaufen. An den Innenflächen der beiden Reibringe entsteht somit eine gitterförmige Struktur aus Stegen und Rippen. Dieses Dokument zeigt somit eine Bremsscheibe mit den üblichen Belüftungsschächten bei der zusätzlich noch tangentialen Rippen eingefügt worden. Eine Ersparnis an Gewicht ist hierdurch nur bedingt erreichbar.

Der Erfindung liegt daher die Aufgabe zugrunde, Lösungen für eine Bremsscheibe mit Belüftung insbesondere für Kraftfahrzeugbremsen zu schaffen, die bei reduziertem Materialaufwand eine Gewichtsersparnis aufweist unter Beibehaltung einer ausreichenden mechanischen und thermischen Widerstandsfähigkeit.

Eine erste Lösung erfüllt die Aufgabe durch die Merkmalskombination des Patentanspruches 1. Danach besitzt der Reibring der Bemsscheibe einen Grundkörper, der als skelettartige Gitterstruktur ausgebildet ist. Die Gitterstruktur ergibt sich dabei aus der Anordnung von sich überschneidenden Rippen. Je nach den spezifischen Anforderungen an die Bremsscheibe kann es ausreichend sein den Reibring ausschließlich als netzartiges Gitter auszuführen, falls die notwendigen Bremsleistungen erbracht werden können und die mechanische Festigkeit der Gitterstruktur ausreichend ist. Allgemein ergibt sich durch die Verwendung einer Gitterstruktur eine erhebliche Gewichtsersparnis sowie Vorteile in der thermischen Abstrahlung.
In einer vorteilhaften Ausführung der Bremsscheibe ist die aus Rippen gebildete Gitterstruktur gegossen, wobei gemäß einer Weiterentwicklung die Freiräume des netzartigen Gitters mit einem geeigneten Füllmaterial versehen sein können. Als solche Füllmaterialien sind beispielsweise Leichtmetalle, keramische Werkstoffe oder sonstige Werkstoffe mit geringem spezifischen Gewicht bei hoher thermischer wie auch mechanischer Widerstandsfähigkeit geeignet. Durch gezielte Wahl des Werkstoffes für die Gitterstruktur und die Füllung, läßt sich der Reibring der Bremscheibe nach den jeweiligen Anforderungen gestalten.

Für eine Bremsscheibe insbesondere für Kraftfahrzeuge mit zwei Reibringen die jeweils als Grundkörper eine aus sich überschneidenden Rippen gebildete, skelettartige Gitterstruktur aufweisen und zwischen denen sich ein Belüftungskanal erstreckt und die außenliegende Reibflächen aufweisen, wobei die Reibringe mittels Stegen miteinander verbunden sind ergibt sich eine weitere Lösung der Aufgabe durch die Merkmalskombination, daß zumindest ein Reibring an seiner dem Belüftungskanal zugewandten Fläche Rippen aufweist und die säulenartigen Stege an den Gitternetzpunkten angeordnet sind, an denen zumindest zwei Rippen zusammentreffen.

Bei dieser Lösung der Erfindung besitzt die Bremsscheibe zwei Reibringe mit außenliegenden Reibflächen, zwischen denen sich ein Belüftungskanal erstreckt, wobei die beiden Reibringe mit Stegen untereinander verbunden sind. Zumindest einer dieser Reibringe weist an seiner dem Belüftungskanal zugewandten Fläche eine Rippenanordnung auf. Vorzugsweise ist diese Rippenanordnung jedoch an beiden Reibringen vorgesehen, wobei die einzelnen Rippen sich in den Belüftungskanal hinein erstrecken und damit zusätzlich die für die Wärmeabstrahlung bedeutsame Reibringoberfläche vergrößern. Durch die Rippenanordnung wird die mechanische und die thermische Widerstandsfähigkeit der einzelnen Reibringe gesteigert. Dies hat zur Folge, daß die eigentliche Reibringdicke verringert werden kann und damit insgesamt für die Bremsscheibe eine Materialersparnis vorliegt. Letztlich wird die vom Reibring zu tragende mechanische und thermische Belastung zumindest anteilig von der Rippenanordnung übernommen.

Weiterhin weisen bei dieser Lösung die am Reibring angeordneten Rippen eine Gitterstruktur auf, bei der sich die einzelnen Rippen netzartig an Gitternetzpunkten kreuzen bzw. aufeinandertreffen. Hierbei ist die Art der Gitterstruktur im wesentlichen frei wählbar, woraus sich für die Grundelemente der Gitterstruktur verschiedenste geometrische Formen ergeben können (z. B. Kreis, Polygonform, Dreieck, Viereck, Vieleck etc.). Als für die Praxis besonders vorteilhaft erweist sich dabei die Verwendung von Gitterstrukturen mit viereckigen (besonders rautenförmigen) bzw. vieleckigen Grundelementen. Speziell bei Herstellung der Bremsscheibe als Gußteil aus einem einzigen Stück lassen sich diese Varianten mit dem gewünschten Erfolg am besten umsetzen. Des weiteren hat die Wahl der Gitterstruktur entscheidenen Einfluß auf die mechanische Belastbarkeit der Rippenanordnung und damit der einzelnen Reibringe.

Erfindungsgemäß sind zusätzlich die säulenartigen Stege zwischen den Reibringen jeweils an den Gitternetzpunkten der Rippenanordnung angeordnet, wobei für beide Reibringe die gleiche Gitterstruktur verwendet wird. Hierdurch ergibt sich eine besonders günstige Gießherstellung sowie das größte Maß an Material- und Gewichtseinsparung für die gesamte Bremsscheibe.

Vorzugsweise sind die die beiden Reibringe miteinander verbindenden Stege als Säulen ausgeführt, insbesondere mit einem im wesentlichen kreisförmigen bzw. vieleckigen Querschnitt. Dies erleichtert die gießtechnische Herstellung der gesamten Bremsscheibe und begünstigt zudem die Kühlluftströmung im Belüftungskanal zwischen den beiden Reibringen.

In einer weiteren vorteilhaften Variante sind die säulenartigen Stege zwischen den Reibringen jeweils an den Gitternetzpunkten der Rippenanordnung angeordnet, wobei für beide Reibringe die gleiche Gitterstruktur verwendet wird. Hierdurch ergibt sich eine besonders günstige Gießherstellung sowie das größte Maß an Material- und Gewichtseinsparung für die gesamte Bremsscheibe.

Eine bevorzugte Ausführungsform der Erfindung wird anhand der Zeichnung dargestellt und im folgenden näher erläutert.

Innerhalb der Zeichnung zeigt:
- Fig. 1a: eine teilweise aufgebrochene Draufsicht auf eine innenbelüftete Bremsscheibe mit innenliegender Rippenanordnung am Reibring,
- Fig. 1b: eine entlang der Linie B - B in Fig. 1a geschnittene Teilansicht des Reibringes mit Rippen,
- Fig. 2: eine entlang der Linie A - A in Fig. 1a geschnittene Ansicht der gesamten Bremsscheibe.

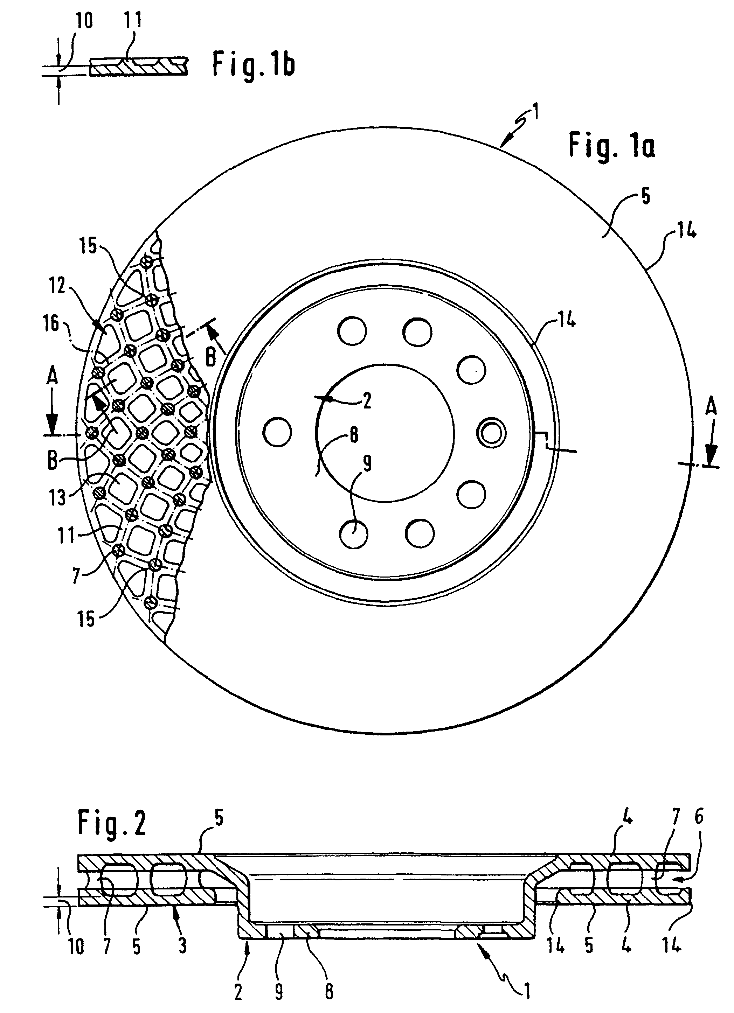

Aus den Figuren 1 und 2 geht eine Bremsscheibe 1 hervor, die im wesentlichen ein topfförmiges Halteteil 2 sowie einen Bremsring 3 aufweist, die einstückig miteinander verbunden sind. Der Bremsring 3 besitzt als innenbelüfteter Bremsring 3 zwei Reibringe 4 mit außenliegenden Reibflächen 5, die durch einen Belüftungskanal 6 getrennt sind . Die beiden Reibringe 4 sind durch in Achsrichtung der Bremsscheibe 1 verlaufende säulenförmige Stege 7 miteinander verbunden, wobei einer der Reibringe 4 unmittelbar an das topfförmige Halteteil 2 angeformt ist. Das Halteteil 2 seinerseits besitzt an einem Flanschabschnitt 8 mehrere Durchgangbohrungen 9 zur achsfesten Verschraubung der Bremsscheibe bzw. zur Radbefestigung. Die gesamte Bremscheibe 1 wird besonders günstig durch ein Gießverfahren hergestellt.

Zur Gewichtseinsparung sowie auch zur Verbesserung der mechanischen und thermischen Eigenschaften der Bremsscheibe 1 sind die Reibringe 4 gegenüber bekannten Ausführungen mit einer geringeren Reibringdicke 10 versehen, wobei jeder Reibring 4 auf seiner dem Belüftungskanal 6 zugewandten Seite die Anordnung mehrerer Rippen 11 aufweist. Durch die reduzierte Reibringdicke 10 ergibt sich ein verminderter Materialbedarf für die Bremsscheibe 1 und somit eine überaus gewünschte Gewichtsersparnis. Im gleichen Zug wird der Querschnitt des Belüftungskanals 6 vergrößert, was sich in einer verbesserten Bremsscheibenkühlung infolge Verstärkung der Kühlluftströmung niederschlägt. Dies eröffnet zudem die Möglichkeit der Reduzierung der Dicke der gesamten Bremsscheibe, vorausgesetzt der Belüftungskanal ist ausreichend dimensioniert und bedarf keiner zusätzlichen Querschnitssvergrößerung. Weiterhin vergößern die sich in den Belüftungskanal 6 erstreckenden Rippen 11 die Reibringoberfläche und erhöhen damit das Maß der Wärmeabstrahlung der Bremsscheibe.

Zur Beibehaltung insbesondere der mechanischen und thermischen Eigenschaften der Bremsscheibe 1 ist die Rippenanordnung auf den Reibringen 4 in Gestalt einer Gitterstruktur 12 ausgeführt. Hierbei kreuzen sich die einzelnen Rippen 11 netzartig.

Ergänzend zu den in den Figuren gezeigten Ausführungen könne sich die Rippen 11 in Form einer netzartigen Gitterstruktur 12 über die gesamte Reibringdicke 10 ertsrecken. Bei ausreichender Dimensionierung der Gitterstruktur 12 ist es sogar denkbar den Reibring 4 ausschließlich als skelettartige Gitterstruktur 12 auszuführen. In einem solchen Fall wird unmittelbar die Gitterstruktur 12 von den Reibbelägen überstrichen und zur Erzeugung der Bremsleistung genutzt. Selbstverständlich besitzt ein Reibring 4 ausschließlich mit Gittergrundstruktur 12 hervorragende thermische Eigenschaften hinsichtlich wärmeabstrahlung, wodurch die Umsetzung der erfinderischen Idee auch bei nicht belüfteten Bremsscheiben mit nur einem Reibring gestattet wird.

Es lassen sich allgemein nahezu beliebige Gitterstrukturen 12 gestalten, die als Gittergrundelemente 13 auf verschiedenste geometrische Formen zurückgreifen können. Als besonders vorteilhaft für die praktische Umsetzung erweist sich wie in Figur 1a dargestellt eine Raute als Gittergrundelement 13. Analog dazu sind selbstverständlich auch noch andere Formen wie z. B. dreieckige, viereckige, vieleckige, polygonartige oder runde Gittergrundelemente möglich. Durch die Gitterstruktur 12 der Rippenanordnung ergibt sich ein mechanisch wie thermisch zwar nachgiebiges (z. B. Bei thermischer Aufweitung der Bremsscheibe 1), andererseits jedoch auch überaus widerstandsfähiges Rippengeflecht, das erst eine Verringerung der Reibringdicke 10 ermöglicht.

Als weiteres vorteilhaftes Ausführungsbeispiel einer geeigneten Gitterstruktur 12 ist die Verwendung wabenartiger Gittergrundelemente 13 (fünf-, sechs- oder vieleckig) zu nennen.

Bei Ausgestaltung einer rautenförmigen Gitterstruktur 12 erstrecken sich die Rippen 11 im wesentlichen zwischen den radialen Rändern 14 des Reibringes 4 und unterstützen damit die Bremsringfestigkeit.

In einer besonders vorteilhaften Gestaltungsvariante ist das netzartige Rippengeflecht der Gitterstruktur 12 in seinen Freiräumen, d. h. im Bereich der Gittergrundelemente 13, mit einem geeigneten Füllmaterial versehen. Ein solches Füllmaterial kann je nach spezifischer Anforderung an die Bremsscheibe beispielsweise aus einem Leichtmetall, einem keramischen Werkstoff oder einem sonstigen Werkstoff mit geringem Gewicht und hoher thermischer sowie mechanischer Widerstandsfähigkeit bestehen. Durch Verwendung unterschiedlicher Materialien für die Gitterstruktur 12 und die Füllungen läßt sich der Reibring 4 an die speziellen Bremsscheibenanforderungen je nach Anwendungsfall zielgerichtet anpassen.

Bei der in den Figuren dargestellten belüfteten Bremsscheibe sind die die Reibringe verbindenden Stege 7 bevorzugt als im Querschnitt im wesentlichen runde Säulen 7 ausgeführt. Dies erweist sich nicht nur für die Gießherstellung der Bremsscheibe 1 als günstig, sondern bewirkt zudem auch noch Strömungsvorteile innerhalb des Belüftungskanales 6. Die im Querschnitt runden Säulen 7 besitzen günstige aerodynamische Eigenschaften und begünstigen damit die Kühlluftströmung. Die Anordnung der Säulen 7 erfolgt vorteilhaft an den Gitternetzpunkten 15 der Rippenanordnung, das heißt an den Stellen, an denen sich die einzelnen Rippen 11 kreuzen bzw. treffen. Dadurch erfordern die Säulen 7 aufgrund ihrer geringen Länge den geringsten Materialbedarf und gestatten demzufolge die größtmögliche Gewichtseinsparung an der Bremsscheibe 1. Bei Wahl einer Gitterstruktur 12 mit rautenförmigen Gittergrundelementen 13 (siehe Figur 1a) sind zusätzlich die säulenartigen Stege 7 in beiden Drehrichtungen der Bremsscheibe 1 zueinander auf leitschaufelförmigen Konturlinien 16 angeordnet. Damit unterstützen die Stege 7 bei Bremsscheibenrotation die Bremsringdurchströmung durch den Belüftungskanal und damit die Bremsscheibenkühlung. Ergänzend wird durch die Gitterstruktur 12 in Verbindung mit einer reduzierten Reibringdicke 10 die einfache Möglichkeit einer leicht zu kontrollierenden Verschleißmarkierung für die Bremsscheibe eröffnet. Dazu wird die Reibringdicke 10 zumindest abschnittsweise auf das maximal zulässige Verschleißmaß des Reibringes abgestimmt. Dabei kann die Reibringdicke beispielsweise innerhalb einiger am Umfang der Bremsscheibe verteilter Gittergrundelemente 13 auf diese maximal zulässige Reibringverschleißmaß reduziert werden.

Bei Erreichen des erwähnten Verschleißmaßes entsteht zumindest ein Loch im Reibring 4, welches durch einfache Sichtkontrolle einen erforderlichen Bremsscheibenwechsel anzeigt.

Wie schon erwähnt wird die Bremsscheibe 1 durch eine Gießverfahren hergestellt und zwar insbesondere unter Verwendung eines kostengünstigen Graugußwerkstoffes. In gleichem Maße sind natürlich auch andere Werkstoffe sowie auch andere Herstellverfahren für die Bremsscheibe 1 möglich. Zur Verstärkung des Effektes der Gewichtsreduzierung bieten sich beispielsweise Leichtmetalle oder auch Verbundwerkstoffe auf Kunststoff- oder Leichtmetallbasis an.

## Patentansprüche

1. Bremsscheibe (1) insbesondere für Kraftfahrzeuge mit zumindest einem Reibring (4), der als Grundkörper eine aus sich überschneidenden Rippen (11) gebildete , skelettartige Gitterstruktur (12) aufweist, **dadurch gekennzeichnet, daß** der Reibring (4) ausschließlich als skelettartige Gitterstruktur (12) ausgeführt ist, an der Reibflächen (5) ausgebildet sind.

2. Bremsscheibe (1) nach Anspruch 1, **dadurch gekennzeichnet, daß** der Reibring (4) mit Gitterstruktur (12) gegossen ist.

3. Bremsscheibe (1) insbesondere für Kraftfahrzeuge mit zwei Reibringen (4), die jeweils als Grundkörper eine aus sich überschneidenden Rippen (11) gebildete, skelettartige Gitterstruktur (12) aufweisen und zwischen denen sich ein Belüftungskanal (6) erstreckt und die außenliegende Reibflächen (5) aufweisen, wobei die Reibringe (4) mittels Stegen (7) miteinander verbunden sind, **dadurch gekennzeichnet, daß** zumindest ein Reibring (4) an seiner dem Belüftungskanal (6) zugewandten Fläche Rippen (11) aufweist und die säulenartigen Stege (7) an den Gitternetzpunkten (15) angeordnet sind, an denen zumindest zwei Rippen (11) zusammentreffen.

4. Bremsscheibe (1) nach Anspruch 1 oder 3, **dadurch gekennzeichnet, daß** Freiräume der Gitterstruktur (12) mit einem geeigneten Füllmaterial, vorzugsweise Leichtmetall oder einem keramischen Werkstoff versehen sind.

5. Bremsscheibe (1) nach Anspruch 1 oder 3, **dadurch gekennzeichnet, daß** die Reibringdicke (10) zumindest abschnittsweise dem maximalen Verschleißmaß eines der Reibringe (4) entspricht.

## Claims

1. Brake disc (1) especially for motor vehicles with at least one friction ring (4), which as a base member includes a skeleton-like lattice structure (12) formed of interwoven ribs (11),
**characterized in that** the friction ring (4) is exclusively configured as a skeleton-like lattice structure (12) at which friction surfaces (5) are designed.

2. Brake disc (1) as claimed in claim 1,
**characterized in that** the friction ring (4) with lattice structure (12) is cast.

3. Brake disc (1) especially for motor vehicles with two friction rings (4) which respectively as a base member include a skeleton-like lattice structure (12) formed of interwoven ribs (11) and between which a ventilating duct (6) extends and which have outward friction surfaces (5), said friction rings (4) being interconnected by means of webs (7),
**characterized in that** at least one friction ring (4) includes ribs (11) at its surface facing the ventilating duct (6), and the column-shaped webs (7) are arranged at the lattice points (15) where aL least two ribs (11) meet.

4. Brake disc (1) as claimed in claim 1 or 3,
**characterized in that** free spaces of the lattice structure (12) are furnished with an appropriate filling material, preferably light metal or any ceramic material.

5. Brake disc (1) as claimed in claim 1 or 3,
**characterized in that** the friction ring thickness (10) corresponds at least in sections to the maximum extent of abrasion of one of the friction rings (4).

## Revendications

1. Disque de frein (1), notamment pour véhicule automobile, comprenant au moins un anneau de friction (4) qui comporte, en tant que corps de base, une structure de grille (12) à claire-voie formée de nervures (11) se recoupant, **caractérisé en ce que** l'anneau de friction (4) est réalisé exclusivement sous forme d'une structure de grille (12) à claire-voie sur laquelle sont formées des surfaces de friction (5).

2. Disque de frein (1) suivant la revendication 1, **caractérisé en ce que** l'anneau de friction (4) est réalisé, avec la structure de grille (12), par moulage par coulée.

3. Disque de frein (1), notamment pour véhicule automobile, comprenant deux anneaux de friction (4) qui comportent chacun, en tant que corps de base, une structure de grille (12) à claire-voie formée de nervures (11) se recoupant, entre lesquels le passage d'aération (6) s'étend et qui comportent des surfaces de friction (5) situées extérieurement, les anneaux de friction (4) étant rendus solidaires entre eux au moyen de ponts (7), **caractérisé en ce qu'**au moins un anneau de friction (4) comporte des nervures (11) sur sa surface faisant face au passage d'aération (6) et les ponts (7) en forme de colonnette sont disposés aux points d'intersection de grille (15) à l'endroit desquels au moins deux nervures (11) se rencontrent.

4. Disque de frein (1) suivant la revendication 1 ou 3, **caractérisé en ce que** des espaces libres de la structure de grille (12) sont pourvus d'une matière de remplissage appropriée, de préférence un métal léger ou une matière céramique.

5. Disque de frein (1) suivant la revendication 1 ou 3, **caractérisé en ce que** l'épaisseur d'anneau de friction (10) correspond au moins par endroits à la dimension d'usure maximale de l'un des anneaux de friction (4).
